(19) Europäisches Patentamt
European Patent Office
Office européen des brevets

(11) Publication number: **0 448 402 B1**

# (12) EUROPEAN PATENT SPECIFICATION

(45) Date of publication of patent specification: **02.11.95**

(51) Int. Cl.[6]: **C10M 169/04**, C09K 5/04, //(C10M169/04,105:38,105:52, 129:18),C10N40:30

(21) Application number: **91302494.9**

(22) Date of filing: **21.03.91**

The file contains technical information submitted after the application was filed and not included in this specification

## (54) Refrigerator oil composition.

(30) Priority: **23.03.90 JP 73649/90**

(43) Date of publication of application:
**25.09.91 Bulletin 91/39**

(45) Publication of the grant of the patent:
**02.11.95 Bulletin 95/44**

(84) Designated Contracting States:
**AT BE CH DE DK ES FR GB GR IT LI LU NL SE**

(56) References cited:
**EP-A- 0 336 171**
**EP-A- 0 406 479**
**EP-A- 0 430 657**
**WO-A-90/12849**
**US-A- 2 807 155**
**US-A- 4 431 557**
**US-A- 4 851 144**

(73) Proprietor: **ASAHI DENKA KOGYO KABUSHIKI KAISHA**
**2-35, Higashiogu 7-chome**
**Arakawa-ku**
**Tokyo 116 (JP)**

(72) Inventor: **Kamakura, Tamiji**
**875-3, Kunugi,**
**Fujischirocho**
**Kitasouma-gun,**
**Ibaraki (JP)**
Inventor: **Tatsumi, Yukio**
**705-1-226, Koyama**
**Matsudo-shi,**
**Chiba (JP)**
Inventor: **Namiwa, Kimiyoshi**
**Asahiryo,**
**46-21, Higashiogu, 8-chome**
**Arakawa-ku,**
**Tokyo (JP)**
Inventor: **Tanaka,Noriyoshi,**
**314,29-10,Mihara 3-chome,**
**Asaka-shi,Saitama, (JP)**
Inventor: **Namiki,Masato**
**Asahiryo,46-21 Higashiogu,8-chome,**
**Arakawa-ku,Tokyo (JP)**

(74) Representative: **Ackroyd, Robert et al**
**W.P. THOMPSON & CO.**
**Eastcheap House**
**Central Approach**
**Letchworth, Hertfordshire SG6 3DS (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).



Rank Xerox (UK) Business Services
(3.10/3.09/3.3.3)

## Description

The present invention relates to a refrigerator oil composition and more particularly to a refrigerator oil composition for a refrigerator using a chlorine-free fluorocarbon refrigerant such as Flon-134a (1,1,1,2-tetrafluoroethane).

Description of the Prior Art

Being excellent in chemical stability, low toxicity, non-combustibility, etc., fluorocarbon compounds have been widely used in the field of refrigerant, aerosol, foaming agent, detergent, etc.

It has been believed in recent years, however, that the fluorocarbon compounds that are released into the atmosphere destroy the ozone layer in the stratosphere, thus making themselves responsible for the warming of the Earth's atmosphere, the so-called greenhouse effect. Under these circumstances the tendency of reducing the production and consumption of some specified fluorocarbon compounds has been enhanced.

Accordingly, the development of fluorocarbon compounds which are free from the possibility of destroying the ozone layer or causing the greenhouse effect, that is, do not contain any chlorine atom in the molecules and can be relatively readily decomposed is in progress.

In such circumstances, Flon-134a which is similar to Flon-12 (dichlorodifluoromethane) in physical properties has been developed in place of Flon-12 which has been widely used as a refrigerant for household refrigerators, air conditioners, small-sized refrigerators for business use, air conditioners for automotive cars, etc.

However, Flon-134a not containing chlorine atom in the molecule greatly differs from the fluorocarbon compounds containing chlorine atoms, such as Flon-12 or Flon-22 (monochlorodifluoromethane) with respect to solubility. Thus, Flon-134a is poor in compatibility with naphthene-base mineral oils and alkylbenzenes that have heretofore been used as refrigerator oils, resulting in such troubles as deteriorated oil return in an evaporator, seizure of compressor parts or abnormal vibration. Hence the development of a refrigerator oil sufficiently compatible with the abovementioned oils is required.

Furthermore in the refrigerator oil composition for a refrigerator using Flon-12 as the refrigerant, the chlorine atoms present in the molecule of Flon-12 exhibit the effect as an extreme-pressure additive of improving the lubrication effect. On the other hand, Flon-134a brings about severe lubrication conditions and the decomposition of the refrigerator oil because of its being free from chlorine atom. Accordingly, the development of a refrigerator oil with high stability against decomposition is required.

In regard to a refrigerator oil composition for a refrigerator using Flon-134a as the refrigerant, a polyalkylene glycol having a molecular weight of 2000 or less and at least two functional groups has been proposed in USP No. 4755316, which is, however, hygroscopic and liable to cause, for example, malfunction and plugging due to moisture (moisture choke) of an expansion valve of a refrigerator, decomposition of the Flon, and metal corrosion due to the resultant hydrofluoric acid.

Formerly the present inventors invented a lubricating oil for a refrigerator which comprises a neopentyl polyol ester which is compatible with chlorine-free fluorocarbon refrigerants such as Flon-134a (cf. EP-A-0430657 and Japanese Patent Application No. 309867/ 1989).

The above lubricating oil has achieved much improvement in electrical insulation properties and hygroscopicity as compared with the above polyalkylene glycol, but still has involved the corrosion probelm that when moisture is mixed in the refrigerator oil composition, the ester is sometimes hydrolyzed by chain reactions causing decrease in the compatibility with the fluorocarbon compounds.

Accordingly an object of the present invention is to provide a refrigerator oil composition excellent in the compatibility with chlorine-free fluorocarbon refrigerants and also rich in the stability against hydrolysis.

In order to solve the above problem, the present inventors have intensively investigated a variety of synthetic lubricating oils and finally accomplished the present invention.

The refrigerator lubricant composition according to the present invention comprises an ester compound and an epoxy compound characterised in that said epoxy compound is an aliphatic glycidyl ether compound, an aromatic glycidyl either compound or a polyalkyleneglycol diglycidyl ether compound and in that the ester compound is obtained from an acid selected from fatty acids having 2 to 6 carbon atoms, dicarboxylic acids and branched chain dicarboxylic acids, and a neopentyl polyol and in that the epoxy compound is present in an amount of from 0.01 to 25 percent by weight based on the weight of the ester compound.

The invention further comprises a refrigerator oil composition free of chlorine-containing fluorocarbons which comprises (A) a chlorine-free fluorocarbon and (B) a refrigerator lubricant composition of the

invention, in a volume ratio of (A) to (B) of 1:99 to 99:1. The invention further provides such a refrigerator oil composition, in which the fluorocarbon is 1,1,1,2-tetrafluoroethane.

Examples of the chlorine-free fluorocarbon refrigerants associated with the present invention include Flon-134 (1,1,2,2-tetrafluoroethane), Flon-134a, Flon-143 (1,1,2-trifluoroethane), Flon-143a (1,1,1-trifluoroethane), Flon-152 (1,2-difluoroethane), Flon-152a (1,1-difluoroethane) and the mixture of at least two thereof. Among them, Flon 134a is preferable becuase of its similarity in physical properties to Flon-12 which is generally used at the present time.

Examples of the fatty acid to be used as the raw material of the neopentyl polyol ester in the present invention include linear saturated fatty acids, branched saturated fatty acids, and linear and branched dibasic acids, each having 2 to 6 carbon atoms or mixtures of at least two thereof. Examples of the linear saturated fatty acids include acetic, propanoic, butanoic, pentanoic and hexanoic acids. Examples of the branched saturated fatty acids include 2-methylpropanoic, 2-methylbutanoic, 3-methylbutanoic, trimethylacetic, 2-methylpentanoic, 3-methylpentanoic, 4-methylpentanoic, 2-ethylbutanoic, 2,2-dimethylbutanoic and 3,3-dimethylbutanoic acids. Examples of the dibasic acids include 1,4-butanedicarboxylic acid.

Among them, particularly preferable are fatty acids including butanoic, pentanoic, 2-methylpropanoic and 2-methylbutanoic acids.

The neopentyl polyol to be used as another raw material of the neopentyl polyol ester in the present invention is a polyol having a neopentyl structure:

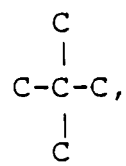

desirably one having at least 3 hydroxyl groups in its molecule, and more desirably one having at least 3 hydroxyl groups, each being bonded to the carbon atom at $\beta$-position from the central carbon atom in the neopentyl structure, that is, not bonded to any hydrogen atom. Examples of usable polyols include trimethylolpropane, pentaerythritol, dipentaerythritol, ditrimethylolpropane, and ditrimethylolethane, among which pentaerythritol and dipentaerythritol are desirable. Although a plurality of neopentyl structures may be contained in the polyol molecule, the number of carbon atoms in the molecule is preferably 50 or less and particularly preferably 20 or less.

The above linear saturated fatty acid, branched saturated fatty acid or dibasic acid each having 2 to 6 carbon atoms and the neopentyl polyol may be used alone or as a mixture of at least two thereof. The neopentyl polyol ester to be used in the present invention can be obtained by conventional esterification or transesterification.

It is preferable that the neopentyl polyol ester to be used in the present invention consists of solely a polyol ester prepared from the abovementioned fatty acid having 2 to 6 carbon atoms, instead of 7 or more. When, however, it is necessary to use also a fatty acid having 7 or more carbon atoms in due consideration of lubricating characteristics or volume resistivity, at least 20 mole % of a fatty acid having 2 to 6 carbon atoms should be contained in the total fatty acids and also, it is preferable to regulate the composition of the fatty acid as the raw material so that the average number of carbon atoms in the fatty acid is 6 or less per hydroxyl group in the neopentyl polyol.

The epoxy compound used in the present invention has at least one glycidyl ester group in its molecule and is selected from aliphatic glycidyl ethers such as propylene glycol diglycidyl ether, neopentyl glycol diglycidyl ether, 1,4-butanediol diglycidyl ether, and 1-propanol glycidyl ... ether; aromatic glycidyl ethers such as phenyl glycidyl ether, cresyl glycidyl ether and diglycidyl ether of bisphenol A-alkylene oxide adduct; and polyalkylene glycol diglycidyl ether, because they are well compatible with refrigerants such as Flon-134a. Each of them may be used either alone or as a mixture of at least two thereof.

In the diglycidyl ether of polyalkylene glycol or other alkylene oxide adducts, preferable constitutive alkylene groups are ethylene, propylene, butylene, etc., and the preferable molecular weight thereof is 1000 or less in view of the stability against hydrolysis.

The mixing ratio of the epoxy compound to the neopentyl polyol ester in the composition according to the present invention is 0.01:100 to 25:100 by weight, preferably 0.5:100 to 5:100 by weight. If the ratio of the epoxy compound to the ester is less than 0.01:100 by weight, no sufficient stability against hydrolysis can be imparted to the refrigerator oil. On the other hand if it exceeds 25:100 by weight, the electrical insulation and lubrication properties deteriorate.

Although the refrigerator lubricant composition according to the present invention may be solely composed of the neopentyl polyol ester containing the above specified quantity of the epoxy compound, it may further contain a known lubricant for a refrigerator, such as mineral oil, alkylbenzene or polyalkylene glycol. Moreover, a known additive for the lubricant of a refrigerator using a fluorocarbon compound as the refrigerant may be added to the present composition within an ordinary dose. Examples of such additives include phosphoric esters such as tricresyl phosphate, phosphorous esters such as triethyl phosphite, organotin compounds such as dibutyltin laurate, and antioxidants such as α-naphthylbenzylamine, phenothiazone or BHT.

The refrigerator lubricant composition according to the present invention is completely compatible with a chlorine-free fluorocarbon refrigerant such as Flon-134a substantially in almost all mixing ratios (1:99 to 99:1) at a temperature ranging from -50 to 60 °C, that is, the actual working temperature range of a lubricant for a refrigerator.

Furthermore as different from the refrigerator lubricant based on polyalkylene glycol, the refrigerator lubricant composition according to the present invention has a low hygroscopicity and a high volume resistivity. Therefore, the use of this lubricant serves to solve the problem of hygroscopicity which has been thought to cause troubles in refrigerators and at the same time improve the electrical insulation properties and stability against hydrolysis.

The present invention will now be described in more detail by referring to the following Examples, though it shall not be limited thereto.

[Examples 1 to 16 and Comparative Examples 1 to 6]

Various refrigerator lubricant compositions were prepared by the use of the following Samples 1 to 15 at compounding ratios specified in Table 1.

Sample 1

A neopentyl polyol ester obtained by the use of DPET (dipentaerythritol) as the neopentyl polyol and a mixture of pentanoic acid with 2-methylbutanoic acid (50 : 50 by mole) as the fatty acid.

Kinematic viscosity at 40 °C : 68 cSt ($68x10^{-6}$ $m^2/s$).

Pour point: -45 °C.

Average number of carbon atoms of the fatty acid per hydroxyl group of the neopentyl polyol: 5.

Sample 2

A neopentyl polyol ester obtained by the use of DPET (dipentaerythritol) as the neopentyl polyol and a mixture of hexanoic acid with 2-methylbutanoic acid (50 : 50 by mole) as the fatty acid.

Kinematic viscosity at 40 °C : 71 cSt ($71x10^{-6}$ $m^2/s$).

Pour point: -45 °C.

Average number of carbon atoms of the fatty acid per hydroxyl group of the neopentyl polyol: 5.5

Sample 3

A neopentyl polyol ester obtained by the use of PET (pentaerythritol) as the neopentyl polyol and a mixture of hexanoic acid with 2-methylbutanoic acid (50 : 50 by mole) as the fatty acid.

Kinematic viscosity at 40 °C: 25 cSt ($25x10^{-6}$ $m^2/s$).

Pour point: -45 °C.

Average number of carbon atoms of the fatty acid per hydroxyl group of the neopentyl polyol: 5.5.

Sample 4

A neopentyl polyol ester obtained by the use of TMP (trimethylolpropane) as the neopentyl polyol and a mixture of 1,4-butanedicarboxylic acid, 2-methylbutanoic acid and pentanoic acid (2 : 7 : 7 by mole) as the fatty acid.

Kinematic viscosity at 40 °C: 85 cSt ($85x10^{-6}$ $m^2/s$)

Pour point: -45 °C.

Average number of cabon atoms of the fatty acid per hydroxyl group of the neopentyl polyol: 5.25.

Sample 5

A polyalkylene glycol compound represented by the formula:

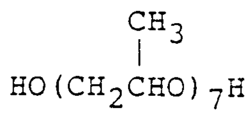

Kinematic viscosity at 40 ° C: 34 cSt ($34 \times 10^{-6}$ $m^2/s$).
Pour point: -42.5 ° C.

Sample 6

A polyalkylene glycol compound represented by the formula:

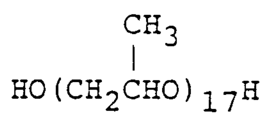

Kinematic viscosity at 40 ° C: 73 cSt ($73 \times 10^{-6}$ $m^2/s$).
Pour point: -45 ° C.

Sample 7

Mineral oil (neutral oil 150).
Kinematic viscosity at 40 ° C: 31 cSt ($31 \times 10^{-6}$ $m^2/s$).
Pour point: -15 ° C.

Sample 8

Propylene glycol diglycidyl ether.

Sample 9

Neopentyl glycol diglycidyl ether.

Sample 10

Polypropylene glycol (mol. wt.: ca 400) diglycidyl ether.

Sample 11

Polypropylene glycol (mol. wt.: ca 800) diglycidyl ether.

Sample 12

Polyethylene glycol (mol. wt.: ca 400) diglycidyl ether.

Sample 13

Phenyl glycidyl ether.

Sample 14

Cresyl glycidyl ether.

Sample 15

A neopentyl polyol ester obtained by the use of DPET (dipentaerythritol) as the neopentyl polyol and a mixture of pentanoic acid with isoheptanoic acid (5 : 1 by mole) as the fatty acid.

Kinematic viscosity at 40 °C: 68 cSt ($68x10^{-6}$ $m^2/s$)

Pour point: -45 °C

Average number of carbon atoms of the fatty acid per hydroxyl group of the neopentyl polyol: 5.3.

Table 1

| | Polyol ester | Epoxy compound | Content of epoxy compound based on polyol ester (wt.%) |
|---|---|---|---|
| Ex. 1 | sample 1 | sample 8 | 3 |
| Ex. 2 | sample 2 | sample 8 | 3 |
| Ex. 3 | sample 3 | sample 8 | 3 |
| Ex. 4 | sample 4 | sample 8 | 3 |
| Ex. 5 | sample 2 | sample 9 | 0.5 |
| Ex. 6 | sample 2 | sample 9 | 3 |
| Ex. 7 | sample 2 | sample 9 | 5 |
| Ex. 8 | sample 3 | sample 10 | 3 |
| Ex. 9 | sample 3 | sample 11 | 3 |
| Ex. 10 | sample 3 | sample 12 | 3 |
| Ex. 11 | sample 2 | sample 13 | 3 |
| Ex. 12 | sample 4 | sample 13 | 3 |
| Ex. 13 | sample 2 | sample 14 | 3 |
| Ex. 14 | sample 2 | sample 9 | 0.02 |
| Ex. 15 | sample 2 | sample 9 | 20 |
| Ex. 16 | sample 15 | sample 8 | 3 |
| Comp. Ex. 1 | sample 2 | sample 9 | 0.005 |
| Comp. Ex. 2 | sample 2 | sample 9 | 30 |
| Comp. Ex. 3 | sample 5 | - | - |
| Comp. Ex. 4 | sample 6 | - | - |
| Comp. Ex. 5 | sample 7 | - | - |
| Comp. Ex. 6 | sample 2 | - | - |

Various refrigerator lubricant compositions thus obtained were subjected to the tests for the compatibility with fluorocarbon, stability against hydrolysis and electrical insulation properties by the following methods and the results are given in Table 2.

<Test for compatibility with fluorocarbon>

① 15 parts by weight of each of the refrigerator lubricant compositions listed in Table 1 and 85 parts by weight of Flon-134a

or ② 60 parts by weight of each of the refrigerator lubricant compositions listed in Table 1 and 40 parts by weight of

Flon-134a were fed into a 1-ℓ autoclave made of glass and were tested for the compatibility at -60 to 100 °C.

〈Test for stability against hydrolysis〉

18 parts by weight of each of the refrigerator lubricant compositions listed in Table 1, 80 parts by weight of Flon-134a and 0.002 parts by weight of water were fed into a 100-ml autoclave made of stainless

steel (SUS-316), in which were further placed three metal pieces (50 x 25 x 1.5 mm in size) made of steel, copper and aluminium, respectively. The autoclave was hermetically sealed and the contents were heated at 150 °C for 14 days (336 hours). After the completion of the heating test, Flon-134a and water were removed by vacuum deaeration and the refrigerator oil compositions were evaluated for viscosity, appearance and acid value. The metal pieces were washed with toluene and ethanol and measured for change in weight.

<Test for electrical insulation properties>

Each of the refrigerator lubricant compositions listed in Table 1 was measured for volume resistivity, which is usually used as a measure of electrical insulating properties, at a humidity of 70% and temperature of 30 °C by the method using a DC amplifier according to JIS C-2101. Advantest TR-8601 (mfd. by Advantest Corp.) and Advantest TR-44 (mfd. by Advantest Corp.) were used as a micro-ammeter and a liquid resistance measuring cell, respectively, at an impressed voltage of 100 V.

Table 2

| Ex. and Comp. Ex. No. | Test for compatibility with fluorocarbon ① | Test for compatibility with fluorocarbon ② | Test for stability against hydrolysis: Viscosity (40°C, cst) before test | Viscosity (40°C, cst) after test | rate of viscosity change (%) | appearance (Gardner) before test | appearance (Gardner) after test | acid value (mgKOH/g) before test | acid value (mgKOH/g) after test | rate of weight change of metal piece (mg/cm²) steel | copper | aluminum | Test for electrical insulation properties: Volume resistivity (Ωcm) |
|---|---|---|---|---|---|---|---|---|---|---|---|---|---|
| Ex. 1 | compl. compatible | compl. compatible | 68 | 70 | +3 | yellow transparent (5) | yellow transparent (5) | 0.15 | 0.14 | ±0 | ±0 | ±0 | $3.5 \times 10^{12}$ |
| " 2 | " | " | 71 | 72 | +1 | " (5) | " (5) | 0.13 | 0.13 | ±0 | ±0 | ±0 | $3.2 \times 10^{12}$ |
| " 3 | " | " | 20 | 20 | ±0 | " (5) | " (5) | 0.12 | 0.12 | ±0 | ±0 | ±0 | $2.9 \times 10^{12}$ |
| " 4 | " | " | 85 | 88 | +4 | " (6) | " (6) | 0.21 | 0.22 | ±0 | ±0 | ±0 | $9.8 \times 10^{12}$ |
| " 5 | " | " | 71 | 74 | +4 | " (5) | " (5) | 0.13 | 0.15 | ±0 | ±0 | ±0 | $4.0 \times 10^{12}$ |
| " 6 | " | " | 71 | 72 | +1 | " (5) | " (5) | 0.13 | 0.13 | ±0 | ±0 | ±0 | $3.2 \times 10^{12}$ |
| " 7 | " | " | 71 | 71 | ±0 | " (5) | " (5) | 0.13 | 0.12 | ±0 | ±0 | ±0 | $2.6 \times 10^{12}$ |
| " 8 | " | " | 20 | 20 | ±0 | " (5) | " (5) | 0.12 | 0.12 | ±0 | ±0 | ±0 | $9.5 \times 10^{11}$ |
| " 9 | " | " | 20 | 21 | +5 | " (5) | " (5) | 0.12 | 0.14 | ±0 | ±0 | ±0 | $9.1 \times 10^{11}$ |
| " 10 | " | " | 20 | 21 | +5 | " (5) | " (5) | 0.12 | 0.13 | ±0 | ±0 | ±0 | $9.4 \times 10^{11}$ |
| " 11 | " | " | 71 | 73 | +3 | " (5) | " (5) | 0.13 | 0.13 | ±0 | ±0 | ±0 | $1.5 \times 10^{12}$ |
| " 12 | " | " | 85 | 88 | +4 | " (6) | " (6) | 0.21 | 0.22 | ±0 | ±0 | ±0 | $8.5 \times 10^{11}$ |
| " 13 | " | " | 71 | 73 | +3 | " (5) | " (5) | 0.13 | 0.14 | ±0 | ±0 | ±0 | $1.7 \times 10^{12}$ |
| " 14 | " | " | 71 | 78 | +10 | " (5) | " (6) | 0.13 | 0.40 | -0.9 | -0.2 | -0.2 | $4.1 \times 10^{12}$ |
| " 15 | " | " | 69 | 71 | +3 | " (5) | " (5) | 0.13 | 0.15 | -0.1 | ±0 | ±0 | $5.4 \times 10^{11}$ |
| " 16 | " | " | 67 | 69 | +3 | " (5) | " (5) | 0.17 | 0.17 | ±0 | ±0 | ±0 | $3.4 \times 10^{12}$ |
| Comp. Ex. 1 | " | " | 71 | 81 | +14 | " (5) | " (7) | 0.13 | 1.98 | -1.2 | -0.4 | -0.2 | $4.1 \times 10^{12}$ |
| " 2 | " | " | 67 | 69 | +3 | " (5) | " (7) | 0.13 | 0.24 | -0.9 | -0.2 | ±0 | $9.4 \times 10^{10}$ |
| " 3 | " | " | 34 | 16 | -53 | pale yellow transparent (1) | brown transparent (9) | 0.02 | 0.12 | -6.4 | -2.0 | -1.1 | $1.4 \times 10^{9}$ |
| " 4 | " | " | 73 | 34 | -53 | " (1) | " (8) | 0.03 | 0.13 | -5.6 | -1.5 | -0.8 | $2.6 \times 10^{9}$ |
| " 5 | separation | separation | - | - | - | - | - | - | - | - | - | - | $1.3 \times 10^{13}$ |
| " 6 | comp. compatible | compl. compatible | 71 | 94 | +32 | yellow transparent (5) | brown transparent (8) | 0.13 | 3.15 | -3.2 | -1.0 | -0.5 | $4.3 \times 10^{12}$ |

## Claims

1. A refrigerator lubricant composition comprising an ester compound and an epoxy compound characterised in that said epoxy compound is an aliphatic glycidyl ether compound, an aromatic glycidyl

either compound or a polyalkyleneglycol diglycidyl ether compound and in that the ester compound is obtained from an acid selected from fatty acids, dicarboxylic acids and branched chain dicarboxylic acids each having 2 to 6 carbon atoms, and a neopentyl polyol and in that the epoxy compound is present in an amount of from 0.01 to 25 percent by weight based on the weight of the ester compound.

**2.** A composition as claimed in claim 1, in which the ester is obtained from a fatty acid and the fatty acid is selected from straight chain saturated fatty acids and branched saturated fatty acids.

**3.** A composition as claimed in claim 2, in which the fatty acid is selected from the group consisting of acetic acid, propanoic acid, butanoic acid, pentanoic acid, hexanoic acid, 2-methypropanoic acid, 2-methylbutanoic acid, 3-methylpentanoic acid, trimethylacetic acid,, 2-methylpentanoic acid, 3-methylpentanoic acid, 4-methylpentanoic acid, 2-ethylbutanoic acid, 2,2-dimethylbutanoic acid, 3,3-dimethylbutanoic acid and 1,4-butanedicarboxylic acid.

**4.** A composition as claimed in any claims 1 to 3, in which the neopentyl polyol has at least three hydroxyl groups and 50 or fewer carbon atoms.

**5.** A refrigerator oil composition characterised in that it is free of chlorine-containing fluorocarbons and in that it comprises (A) a chlorine-free fluorocarbon and (B) a refrigerator lubricant composition claimed in any of claims 1 to 4 in a volume ratio of (A) to (B) of 1:99 to 99:1.

**6.** A refrigerator oil composition as claimed in claim 5, in which the chlorine-free fluorocarbon is 1,1,1,2-tetrafluoroethane.

**7.** A refrigerator oil composition characterised by being free of chlorine-containing fluorocarbons and by comprising (A) 1,1,1,2-tetrafluoroethane and (B) a composition as claimed in any of claims 1 to 4 in a volume ratio of (A) to (B) of 1:99 to 99:1.

**Patentansprüche**

**1.** Kühlgeräteschmiermittelzusammensetzung, die eine Esterverbindung und eine Epoxidverbindung umfaßt, dadurch gekennzeichnet, daß die Epoxidverbindung eine aliphatische Glycidyletherverbindung, eine aromatische Glycidyletherverbindung oder eine Polyalkylenglykoldiglycidyletherverbindung ist, und dadurch, daß die Esterverbindung aus einer Säure, die aus Fettsäuren, Dicarbonsäuren und verzweigtkettigen Dicarbonsäuren mit jeweils 2 bis 6 Kohlenstoffatomen ausgewählt ist, und einem Neopentylpolyol erhalten wird und dadurch, daß die Epoxidverbindung in einer Menge von 0,01 bis 25 Gewichtsprozent bezogen auf das Gewicht der Esterverbindung zugegen ist.

**2.** Zusammensetzung wie in Anspruch 1 beansprucht, wobei der Ester aus einer Fettsäure erhalten ist und die Fettsäure aus geradkettigen, gesättigten Fettsäuren und verzweigten, gesättigten Fettsäuren ausgewählt ist.

**3.** Zusammensetzung wie in Anspruch 2 beansprucht, wobei die Fettsäure aus der Gruppe ausgewählt ist, die aus Essigsäure, Propansäure, Butansäure, Pentansäure, Hexansäure, 2-Methylpropansäure, 2-Methylbutansäure, 3-Methylpentansäure, Trimethylessigsäure, 2-Methylpentansäure, 3-Methylpentansäure, 4-Methylpentansäure, 2-Ethylbutansäure, 2,2-Dinethylbutansäure, 3,3-Dimethylbutansäure und 1,4-Butandicarbonsäure ausgewählt ist.

**4.** Zusammensetzung wie in einem Anspruch 1 bis 3 beansprucht, wobei das Neopentylpolyol wenigstens drei Hydroxylgruppen und 50 oder weniger Kohlenstoffatome besitzt.

**5.** Kühlgeräteölzusammensetzung, dadurch gekennzeichnet, daß sie frei von chlorhaltigen Fluorkohlenstoffen ist, und dadurch, daß sie (A) einen chlorfreien Fluorkohlenstoff und (B) eine in einem der Ansprüche 1 bis 4 beanspruchte Kühlgeräteschmiermittelzusammensetzung in einem Volumenverhältnis von (A) zu (B) von 1:99 bis 99:1 umfaßt.

**6.** Kühlgeräteölzusammensetzung wie in Anspruch 5 beansprucht, bei welcher der chlorfreie Fluorkohlenstoff 1,1,1,2-Tetrafluorethan ist.

7. Kühlgeräteölzusammensetzung, dadurch gekennzeichnet, daß sie frei von chlorhaltigen Fluorkohlenstoffen ist, und daß sie (A) 1,1,1,2-Tetrafluorethan und (B) eine in einem der Ansprüche 1 bis 4 beanspruchte Zusammensetzung in einem Volumenverhältnis von (A) zu (B) von 1:99 bis 99:1 umfaßt.

## Revendications

1. Composition lubrifiante pour réfrigérateur comprenant un composé ester et un composé époxyde, caractérisée en ce que ledit composé époxyde est un composé éther de glycidyle aliphatique, un composé éther de glycidyle aromatique ou un composé éther de polyalkylèneglycol et de diglycidyle, et en ce que le composé ester est obtenu à partir d'un acide choisi parmi les acides gras, les acides dicarboxyliques et les acides dicarboxyliques à chaîne ramifiée, chacun ayant 2 à 6 atomes de carbone, et d'un néopentylpolyol, et en ce que le composé époxyde est présent en une quantité de 0,01 à 25 % en poids sur la base du poids du composé ester.

2. Composition selon la revendication 1, dans laquelle l'ester est obtenu à partir d'un acide gras, et l'acide gras est choisi parmi les acides gras saturés à chaîne linéaire et les acides gras saturés ramifiés.

3. Composition selon la revendication 2, dans laquelle l'acide gras est choisi dans le groupe constitué de l'acide acétique, de l'acide propanoïque, de l'acide butanoïque, de l'acide pentanoïque, de l'acide hexanoïque, de l'acide 2-méthylpropanoïque, de l'acide 2-méthylbutanoïque, de l'acide 3-méthylpentanoïque, triméthylacétique, de l'acide 2-méthylpentanoïque, de l'acide 3-méthylpentanoïque, de l'acide 4-méthylpentanoïque, de l'acide 2-éthylbutanoïque, de l'acide 2,2-diméthylbutanoïque, de l'acide 3,3-diméthylbutanoïque et de l'acide 1,4-butanedicarboxylique.

4. Composition selon l'une quelconque des revendications 1 à 3, dans laquelle le néopentylpolyol a au moins trois groupes hydroxyles et 50 atomes de carbone ou moins.

5. Composition d'huile pour réfrigérateur caractérisée en ce qu'elle est exempte de composés fluorocarbonés contenant du chlore et en ce qu'elle comprend (A) un composé fluorocarboné exempt de chlore et (B) une composition lubrifiante pour réfrigérateur telle que revendiquée dans l'une quelconque des revendications 1 à 4, en un rapport volumique de (A) à (B) de 1:99 à 99:1.

6. Composition d'huile pour réfrigérateur selon la revendication 5, dans laquelle le composé fluorocarboné exempt de chlore est le 1,1,1,2-tétrafluoroéthane.

7. Composition d'huile pour réfrigérateur caractérisée en ce qu'elle est exempte de composés fluorocarbonés contenant du chlore et en ce qu'elle comprend (A) du 1,1,1,2-tétrafluoroéthane et (B) une composition telle que revendiquée dans l'une quelconque des revendications 1 à 4, en un rapport volumique de (A) à (B) de 1:99 à 99:1.